# EUROPÄISCHE PATENTSCHRIFT

(11) **EP 2 841 889 B1**
(45) Veröffentlichungstag und Bekanntmachung des Hinweises auf die Patenterteilung: **12.01.2022**
(21) Anmeldenummer: 13719530.1
(22) Anmeldetag: 26.04.2013
(51) Int. Cl.: G01G 19/03, G01G 21/00, B01J 37/02

(54) **WAEGEVORRICHTUNG FUER STUECKGUT**
WEIGHING DEVICE FOR PIECE GOODS
DISPOSITIF DE PESAGE POUR MARCHANDISES DE DÉTAIL

(30) Priorität: 27.04.2012 EP 12166054
(43) Veröffentlichungstag der Anmeldung: 04.03.2015
(73) Patentinhaber: Umicore AG & Co. KG, 63457 Hanau (DE)
(72) Erfinder: GEMPP, Joachim, 79395 Neuenburg (DE)
(86) Internationale Anmeldenummer: PCT/EP2013/058732
(87) Internationale Veröffentlichungsnummer: WO 2013/160451

(56) Entgegenhaltungen:
- EP-A1- 0 371 172
- WO-A2-02/03449
- FR-A1- 2 310 553
- US-A- 3 955 665
- US-A- 4 711 314

## Beschreibung

Wägevorrichtungen für auf Bandförderern bewegtes Stückgut sind prinzipiell bekannt.

Aus dem Stand der Technik sind schon Wägevorrichtungen bekannt. Z.B. wird in der FR2310553A1 ein typischer Bandförderer mit einer Wägevorrichtung vorgestellt. Die US3955665 beschreibt eine Wäge-, Transport- und Bedruckeinheit. Auch in der EP371172A1 wird eine Wägevorrichtung vorgestellt, bei der Mittel zur Beförderung eines Gegenstandes zu einer Wiegestelle, Mittel zum Erfassen der Position des genannten Gegenstandes an der genannten Wiegestelle und Mittel zum Wiegen des genannten Gegenstandes vorhanden sind. In diesem Zusammenhang beschreibt die US4711314A eine Waage, die einen erweiterten Messbereich aufweist. Die Waage besitzt eine Mehrbereichswiegeanzeige.

Bei allen bekannten Lösungen treten allerdings zahlreiche Probleme auf. So ist oft eine definierte und möglichst genaue Steuerung der Fördergeschwindigkeit notwendig. Durch das verbreitete vollständige oder teilweise Mitwiegen des Bandförderers und die damit verbundenen hohe Grundlast sind nur Waagen geeignet, die ausreichend hohe Massen bestimmen können und daher in ihrer Genauigkeit und Vielseitigkeit eingeschränkt sind. Außerdem erfordert die Empfindlichkeit gegen äußere Störeinflüsse bei den jeweiligen Konstruktionen eine Einhausung mit großem Platzbedarf und besitzen durch die langen Beruhigungs- und Tarierzeiten der Waagen lange Zykluszeiten. Es war die Aufgabe, diese Mängel des Standes der Technik zu beheben. Die Aufgabe wird gelöst durch eine Wägevorrichtung für Stückgut, welches einen Bandförderer (240, 340) und mindestens eine unterhalb des Bandförderers (240, 340) angeordnete Waage (101, 201, 301, 801) mit einer Auflage für das Wägegut (203, 303, 803) aufweist, wobei die Waage (101, 201, 301, 801) starr angeordnet ist, der Bandförderer (240, 340) mindestens zwei Transportbänder (245, 345) aufweist, die Auflage für das Wägegut (203, 303, 803) mit mindestens einer Auflageverlängerung (207, 307, 807) versehen ist, die zwischen den Transportbändern (245, 345) des Bandförderers (240, 340) hindurchgeführt werden können und die Transportbänder (245, 345) des Bandförderers (240, 340) derart zur Waage (101, 201, 301, 801) hin bewegt werden können, so dass die Auflageverlängerungen (207, 307, 807) ohne eigene Bewegung zwischen den Transportbändern (245, 345) hindurchgeführt werden und auf den Transportbändern (245, 345) bewegtes Stückgut auf den Auflageverlängerungen (207, 307, 807) aufgelegt und durch die Waage (101, 201, 301, 801) gewogen werden kann, wobei die oberhalb der Waage angeordnete Bandfördereinheit in ihrer Gesamtheit zur Waage (101, 201, 301, 801) hin bewegt werden kann, die Endlagen der Bewegung des Bandförderers (240, 340) gedämpft werden, die Bewegung des Bandförderers (240, 340) durch einen einzigen Aktuator (120, 220, 820) erfolgt, wobei die Waage (101, 201, 301, 801) im Förderbetrieb komplett unterhalb des Bandförderers (240, 340) angeordnete ist und mindestens zwei Waagen (101, 201, 301, 801) mit unterschiedlichen Wägebereichen eingesetzt werden.

### Detaillierte Beschreibung der Erfindung

Die Wägevorrichtung ist zur Wägung von Stückgut konzipiert, wobei als Stückgut im Prinzip alle einzelnen Waren oder Werkstücke umfasst sind, die einer Wägung bedürfen. Dies können Autoabgaskatalysatoren und deren Substrate sein, Flaschen oder Konservendosen vor und/oder nach dem Befüllen und dergleichen.

Diese werden auf einem oder mehreren Bandförderern bewegt, wobei diese Güter an verschiedenen Bearbeitungsstationen beliebigen weiteren Verfahrensmaßnahmen unterworfen werden, wobei Befüllen, Beschichten, Auspumpen oder Schleifen, Schweißen und Reinigen nur beispielhaft genannt werden.

Die Wägevorrichtung weist einen Bandförderer und mindestens zwei unterhalb des Bandförderers angeordnete Waagen auf. Bei den Waagen kann es sich um handelsübliche Waagen handeln, die üblicherweise mit einer Auflage für das Wägegut versehen sind.

Bei der Konstruktion der Wägevorrichtung sind die Waagen starr montiert, das heißt, daß die Waagen zur Ausführung des Wägevorgangs nicht bewegt werden. Der Bandförderer weist mindestens zwei Transportbänder auf, alternativ können allerdings auch zwei getrennte Bandförderer verwendet werden. Die Auflage für das Wägegut ist mit mindestens einer Auflageverlängerungen versehen ist, die zwischen den Transportbändern des Bandförderers oder der Bandförderer hindurchgeführt werden können.

Damit ist ersichtlich, daß die Verwendung zweier Bandförderer zwar möglich ist, aber durch die damit bedingte kompliziertere Konstruktion nur dann angewendet werden solle, wenn es unbedingt erforderlich ist, wie z.B. der Größe des zu wiegenden Stückgutes.

Die Auflageverlängerungen können beispielsweise eines oder mehrere Stegbleche sein, welche durch den Zwischenraum zwischen den Transportbändern hindurchgeführt werden können. Es können aber auch zylinder- bzw. stabförmige Verlängerungen eingesetzt werden oder beliebige andere Formen zur Anwendung kommen. Durch diese Konstruktion wird vermieden, daß der Bandförderer ganz oder teilweise mit gewogen werden muß, so daß die Grundlast der Waagen verringert wird. Je nach Größe und Form der Auflageverlängerungen kann nicht nur eine einzelne, sondern eine Mehrzahl an Auflageverlängerungen verwendet werden. Auf diese Weise kann verhindert werden, daß das zu wiegende Stückgut nur einseitig angehoben wird und umfällt oder aber kleinteiliges Stückgut an den Auflageverlängerungen vorbeigeführt wird, was beides eine Wägung verhindert. Auf diese Weise kann außerdem auf Zentrierelemente verzichtet werden, welche den gleichen Zweck erfüllen sollen. Gut bewährt haben sich 1 bis 20, oder 3 bis 15 oder 5 bis 12 Auflageverlängerungen. Es ist ersichtlich, daß nur so viele Auflageverlängerungen in einer Reihe senkrecht zur Förderrichtung des Bandförderers angeordnet werden können wie es Zwischenräume zwischen den Transportbändern gibt, womit die Anzahl der Transportbänder im Zusammenhang mit den nebeneinander angeordneten Auflageverlängerungen steht. Es kann daher auch eine Mehrzahl an Transportbändern verwendet werden, wobei meist 2 bis 20, oder 3 bis 16 oder 4 bis 12 oder 6 bis 10 für die meisten Anwendungen ausreichend sind.

Die Auflageverlängerungen können in mehreren Reihen quer zur Förderrichtung des Bandförderers angeordnet werden. Hierbei haben sich im Allgemeinen 1 bis 5 Reihen oder 2 bis 4, wie 3 bis 4 Reihen, bewährt. Somit kann die Wägevorrichtung durch die Anzahl und Breite der Transportbänder, die Anzahl der Reihen der Auflageverlängerungen und die Anzahl der Auflageverlängerungen an eine große Anzahl von verschiedenen Stückgütern angepasst werden.

Die Transportbänder des Bandförderers können zumindest teilweise derart zu den Waagen hin bewegt werden, so daß die Auflageverlängerungen ohne eigene Bewegung zwischen den Transportbändern hindurchgeführt werden und auf den Transportbändern bewegtes Stückgut auf den Auflageverlängerungen aufgelegt und durch die Waagen gewogen werden kann.

Durch diese Konstruktion werden die Waagen vom Bandförderer mechanisch getrennt, wodurch mit geringem Aufwand die durch den Betrieb des Bandförderers verursachten Störeinflüsse reduziert und das Mitwiegen des Bandförderers vermieden werden.

Die Bewegung der Transportbänder zu den Waagen hin dient dem Ablegen des Stückgutes auf den Auflageverlängerungen der Waagen, so daß das Stückgut gewogen werden kann. Die Bewegung der Transportbänder zu den Waagen hin wird durch das Absenken der gesamten Bandfördererkonstruktion, d.H. des Bandförderers in seiner Gesamtheit, bewirkt. Je nach dem wo die Waagen und die Auflageverlängerungen angeordnet sind kann es genügen, nur einen Teil, wie ein Ende des Bandförderers, so weit abzusenken, um das Stückgut auf den Auflageverlängerungen abzulegen. Bei kompakten Wägevorrichtungen, bei welchen die Länge des Bandförderers nur wenig größer ist als die Länge der Waagen und der Auflageverlängerungen, ist ein Absenken der Transportbänder oder des Bandförderers auf ganzer Länge oft zweckmäßig, da dies meist ohne konstruktiven Mehraufwand möglich ist. Der Betrag der Absenkung richtet sich nach dem verwendeten Stückgut und den konstruktiven Einzelheiten der Wägevorrichtung. Eine Absenkung (und Wiederanhebung) um 3 mm bis 30 mm, insbesondere 5 bis 20 mm oder um 8 bis 12 mm hat sich in der Praxis bewährt. Die Hubbewegung kann vorteilhaft geführt werden. Dies kann durch im Allgemeinen bekannte und erprobte Bauteile geschehen, insbesondere durch Kugelführungen, Reibführungen, Säulenkugelführungen sowie deren Kombinationen. Derartige Bauteile sind als leichtgängig und stabil bekannt und beispielsweise als NSK- oder INA-Kugellager und Führungsprofile, als Führungsschiene, oder NSK/ INA-Führungswagen bekannt und kommerziell erhältlich.

In einer spezifischen Ausgestaltung wird also der gesamte Bandförderer abgesenkt. Das Absenken des Bandförderers kann durch verschiedene Aktuatoren bewirkt werden. Geeignet sind beispielsweise pneumatische, hydraulische oder auch elektrische Aktuatoren geeignet. Ein solcher Aktuator hebt den Bandförderer an und senkt ihn wieder ab. Dies kann meist über ein machanisches System aus z.B. Hebeln bewirkt werden.

Die Endlage des Bandförderers beim Absenken ist gedämpft. Die Dämpfung kann, je nach Art des Aktuators, eine mechanische oder elektronische Dämpfung sein, wobei unter Letzterer eine Dämpfung über eine elektronische Beeinflussung der Bewegung eines elektrischen Aktuators zu verstehen ist, beispielsweise der Änderung der Drehgeschwindigkeit eines Elektromotors oder der Regulierung der Bewegung eines magnetischen Aktuators. Dies kann beispielsweise über die Kontrolle der zugeführten elektrischen Spannung bewirkt werden.

Die Dämpfung kann unabhängig von der Art des Aktuators auch mechanisch erfolgen. In einer spezifischen Ausgestaltung der Erfindung erfolgt die mechanische Dämpfung über eine Exzenterscheibe. Bei dieser Ausführung kann zum Beispiel ein pneumatischer oder hydraulischer Aktuator, wie ein Pneumatikzylinder, über einen Umlenkhebel mit einer Welle verbunden sein, die mindestens eine Exzenterscheibe aufweist. Diese Exzenterscheibe bewirkt die Absenkung und die Anhebung des Bandförderers.

Die Dämpfung hat den technischen Effekt, den Endlagenstoß des Stückguts beim Absenken zu minimieren, so daß auch bei raschem Absenken bzw. Anheben die Beruhigungszeit bzw. Tarierzeit der Waagen nicht erforderlich ist oder minimiert wird.

Da Waagen und Bandförderer mechanisch voneinander getrennt sind, die Waagen also nicht von Bewegungen des Bandförderers beeinflusst wird, werden die Waagen auch beim Hindurchführen der Auflageverlängerungen nicht bewegt, da dies ausschließlich durch die Bewegung des Bandförderers bewirkt wird. Außerdem wird weder durch den Betrieb des Bandförderers noch dessen Bewegen die Messung störend beeinflusst. Auch die Fördergeschwindigkeit des Bandes hat keinen Einfluß auf das Messergebnis. Die Trennung von Waagen und Bandförderer hat außerdem den Effekt, daß der Bandförderer nicht auf den Waagen aufliegt, nicht mitgewogen wird und daher eine geringere Vorlast der Waagen auftritt. Daher können auch Waagen mit hoher Genauigkeit, aber engeren Meßbereichen eingesetzt werden, wodurch verbesserte Meßgenauigkeiten erreichbar sind. Zur Verbreiterung des Meßbereiches werden dann mindestens zwei Waagen eingesetzt, die beispielsweise übereinander angeordnet werden können. Sind die Waagen mit einem mechanischen Überlastschutz versehen, so können diese einfach aufeinander gestellt werden. Zur Erweiterung des Wägebereiches sind zwei, drei oder auch vier aufeinander gestellte Waagen ausreichend, die jeweils unterschiedliche Gewichtsbereiche abdecken. Auf diese Weise ist die Bereitstellung einer Wägevorrichtung möglich, die Stückgut im Bereich von 0,1 Kg bis 60 Kg wiegen kann. Es ist ebenfalls möglich, daß eine solche Wägevorrichtung im Bereich von 0,1 Kg bis 6 Kg mit einer Gewichtstoleranz von +/- 0,2 g und im Bereich von 6 Kg bis 60 Kg mit einer Gewichtstoleranz von +/- 2 g arbeitet. Es können mit einer derartigen Wägevorrichtung also ohne Umbau oder konstruktive Änderungen Stückgüter mit sehr unterschiedlichem Gewicht gewogen werden. Zum Schutz der Waagen vor äußeren Störeinflüssen wie zum Beispiel Zugluft oder Verunreinigung können die Waagen in der Wägevorrichtung eingehaust werden.

Zur automatischen Wägung kann zweckmäßig auch einen Sensor zur Detektion bzw. Ortsbestimmung des transportierten und zu wägenden Stückguts auf dem Bandförderer angeordnet sein, der die korrekte Anordnung über den Auflageverlängerungen sicherstellt. Als Sensor geeignet können beispielsweise eine Kamera, eine Anordnung einer oder mehrerer Lichtschranken oder kapazitive Sensoren dienen, um die Position des Stückgutes zu bestimmen oder zu detektieren, wenn es korrekt über den Auflageverlängerungen angeordnet ist.

Es ist ebenfalls möglich durch Führungsschienen eine korrekte Zuführung des zu wägenden Stückguts sicherzustellen.

Die Wägung wird wie folgt durchgeführt. Das zu wägende Stückgut wird durch den Bandförderer transportiert und sobald es eine geeignete Position über den Auflageverlängerungen erreicht hat wird der Bandförderer gestoppt, so daß das Stückgut über den Auflageverlängerungen angeordnet ist, jedoch noch immer von den Transportbändern getragen wird und auf diesen aufliegt. Nun können die Waagen tariert werden. Dann wird der Aktuator aktiviert, welcher durch Absenken des Bandförderers bewirkt, daß das Stückgut abgesenkt und auf den Auflageverlängerungen abgesetzt wird, wodurch die Auflageverlängerungen die Krafteinwirkung des Stückguts auf die Waagen übertragen. Anschließend ist oft eine geringe Wartezeit von wenigen Sekunden erforderlich, insbesondere 0,5 bis 10, oder 1 bis 7, oder 2 bis 5 oder 0,6 bis weniger als 5 Sekunden. Nach Feststellen des Gewichts an den Waagen ist die Wägung beendet und der Aktuator wird erneut betätigt und hebt den Bandförderer an, so daß das Stückgut wieder auf den Transportbändern aufliegt. Durch Anlaufen des Bandförderers wird das gewogene Stückgut abtransportiert. Die Bewegung des Absenkens des Stückgutes auf die Auflageverlängerungen ist gedämpft, das bedeutet, die Bewegung ist zu Beginn schneller als unmittelbar vor dem Aufsetzen. Hierdurch wird der Stoß auf die Waagen reduziert, wodurch die Wägung schneller abgeschlossen ist. Die Erfindung betrifft daher auch ein Verfahren zur Wägung von Stückgut mit einer Vorrichtung der vorliegenden Patentanmeldung mit den Schritten:
Transportieren des zu wägenden Stückguts bis zu einer geeigneten Position über den Auflageverlängerungen;
Stoppen des Bandförderers;
Gegebenenfalls Tarieren der Waagen;
Absenken des Stückguts auf die Auflageverlängerungen durch zumindest teilweises Absenken des Bandförderers;
Feststellen des Gewichts des Stückguts durch dessen Krafteinwirkung auf die Waagen;
Anheben des Stückguts von den Auflageverlängerungen durch zumindest teilweises Anheben des Bandförderers;
Abtransportieren des Stückguts.

Als Stückgut können in dem Verfahren ein Autoabgaskatalysator, ein Monolith zur Herstellung eines Autoabgaskatalysators, deren Vorprodukte oder ein Behälter für Nahrungsmittel verwendet werden, wie z.B. Konservendosen, Kunststoffbecher oderschalen sowie Schachteln. Auch Verpackungen aus Karton, Kunststoff, Metall oder deren Kombinationen für beliebige Zwecke können mit der Wägevorrichtung vorteilhaft gewogen werden, beispielsweise um bei der Befüllung die Füllmenge zu regeln oder das Gewicht aus anderen Gründen zu bestimmen.

Die Erfindung betrifft außerdem die Verwendung der Wägevorrichtung in einem Verfahren zur Herstellung von Autoabgaskatalysatoren. Hierzu kann die Wägevorrichtung gut eingesetzt werden in Verfahren zur Herstellung von Autoabgaskatalysatoren, in denen zur Qualitätssicherung oder zur Kontrolle der Beschichtungsmenge im Herstellungsprozeß Autoabgaskatalysatoren oder deren Vorprodukte, wie z.B. unbeschichtete Monolithe zur Herstellung von Autoabgaskatalysatoren gewogen werden. Solche Verfahren sind beispielsweise beschrieben in EP-A-1620200, EP-A-1817107, US 3959520 oder US 4208454, worauf Bezug genommen wird.

Ein Verfahren zur Herstellung von Autoabgaskatalysatoren kann wie folgt durchgeführt werden. Die unbeschichteten, keramischen oder metallischen Träger werden zur Wägevorrichtung und dann bis zu einer geeigneten Position über den Auflageverlängerungen transportiert. Der Bandförderer wird gestoppt und gegebenenfalls die Waagen tariert. Anschließend erfolgt das Absenken des Trägers auf die Auflageverlängerungen durch zumindest teilweises Absenken des Bandförderers und das Feststellen des Gewichts des Stückguts durch dessen Krafteinwirkung auf die Waagen. Dieses Gewicht wird gespeichert. Es folgt das Anheben des Stückguts von den Auflageverlängerungen durch zumindest teilweises Anheben des Bandförderers. Der Träger wird dann zur Beschichtungsstation weiter transportiert, wo Beschichtungssuspension in das Innere des Trägers eingebracht wird. Die Träger können als Wandflußfilter oder Durchflußwabenkörper ausgestaltet sein und basieren im Allgemeinen auf einem zylindrischen Körper mit zwei Stirnseiten und einer Mantelfläche, der von Stirnseite zu Stirnseite mit einer Vielzahl von Strömungskanälen versehen ist. Die Grundfläche des zylindrischen Körpers kann kreisförmig, oval, dreieckig oder trapezförmig sein und weist in der Regel abgerundete Ecken auf.

Das Einbringen der Beschichtungssuspension kann üblicherweise erfolgen durch Eintauchen der unteren Stirnfläche in Beschichtungssuspension und Anlegen eines Unterdrucks an der oberen Stirnfläche des Trägers, durch Bereitstellen von Beschichtungssuspension an der oberen Stirnfläche des Trägers, etwa in dem auf der Oberfläche eine Dosiervorrichtung aufgesetzt wird, welche die Beschichtungssuspension (insebsondere eine bestimmte Menge Beschichtungssuspension) auf die obere Stirnfläche des Trägers abgibt und anschließend durch Anlegen eines Unterdrucks an die untere Stirnfläche, oder durch Einbringen, wie Einpumpen, der Beschichtungssuspension von der unteren Stirnfläche aus und anschließendes Absaugen der eingebrachten Beschichtungssuspension von der unteren Stirnfläche aus. Hierbei kann eine Benetzung der Wände der Strömungskanäle des Trägers über die gesamte Länge des Trägers und damit der Strömungskanäle erfolgen, oder aber nur einer Teillänge. Anschließend wird der so beschichtete Träger zur Wägevorrichtung und dann bis zu einer geeigneten Position über den Auflageverlängerungen transportiert. Der Bandförderer wird gestoppt und gegebenenfalls die Waagen tariert. Anschließend erfolgt das Absenken auf die Auflageverlängerungen durch zumindest teilweises Absenken des Bandförderers und das Feststellen des Gewichts des beschichteten Trägers durch dessen Krafteinwirkung auf die Waagen. Dieses Gewicht wird gespeichert. Das vorher bestimmte Gewicht des unbeschichteten Trägers wird nun von dem nach der Beschichtung bestimmten Gewicht des beschichteten Trägers subtrahiert, um die Beschichtungsmenge zu erhalten. Diese Beschichtungsmenge wird mit einer vorher festgelegten Zielmenge mit einer darunterliegenden Mindestmenge und einer über der Zielmenge liegenden Maximalmenge für die Beschichtung verglichen. Bei Abweichung kann ein Überschuß durch einen weiteren Absaugschritt entfernt werden, indem der beschichtete Träger auf einer Absaugstation angeordnet und ein Unterdruck an der unteren Stirnfläche des Trägers angelegt wird. Bei einem Unterschuß an Beschichtungssuspension kann der beschichtete Träger durch Aufdosieren, wie beispielsweise durch Aufsprühen, von Beschichtungssuspension auf die obere Stirnfläche und anschließendem oder gleichzeitigem Anlegen eines Unterdrucks an der unteren Stirnfläche des beschichteten Trägers mit zusätzlicher Beschichtung versehen werden. Anschließend wird die tatsächlich aufgebrachte Menge durch erneutes Wiegen bestimmt, indem der so beschichtete Träger zur Wägevorrichtung und dann bis zu einer geeigneten Position über den Auflageverlängerungen transportiert wird. Der Bandförderer wird gestoppt und gegebenenfalls die Waagen tariert. Anschließend erfolgt das Absenken auf die Auflageverlängerungen durch zumindest teilweises Absenken des Bandförderers und das Feststellen des Gewichts des beschichteten Trägers durch dessen Krafteinwirkung auf die Waagen. Dieses Gewicht wird gespeichert. Das vorher bestimmte Gewicht des unbeschichteten Trägers wird nun von dem nach der Beschichtung bestimmten Gewicht des beschichteten Trägers subtrahiert, um die Beschichtungsmenge zu erhalten. Die Bedingungen der Korrektur, also Zeitdauer und/oder Stärke des Absaugens, Menge der aufgesprühten Beschichtungssuspension, werden ebenfalls gespeichert und als Basis für die Korrektur von nachfolgend beschichteten Trägern herangezogen.

Die Menge an aufdosierter Beschichtungssuspension oder die Stärke oder Zeitdauer des Absaugens werden zweckmäßigerweise anhand der gespeicherten Werte für die Bedingungen der Korrektur eingestellt, um eine möglichst genaue Anpassung an die zu entfernende, überschüssige Menge an Beschichtungssuspension oder aufzubringende zusätzliche Beschichtungssuspension zu bewirken. Hierbei kann entweder auf eine Vielzahl vorheriger Daten zurückgegriffen werden um ein möglichst genaues Anpassen an die festgelegte Zielmenge zu erreichen, oder aber die Bedingungen der Korrektur des unmittelbar vorhergehenden Trägers herangezogen werden. Die letztgenannte Vorgehensweise hat den Vorteil, daß eine im Verlaufe der Beschichtung zahlreicher Träger allmählich auftretende Veränderung von z.B. der Beschichtungssuspension in die Festlegung der Bedingungen der Korrektur einbezogen wird. Es kann jedoch auch ein gewichtetes Einbeziehen von sowohl einer Vielzahl vorheriger Daten gemeinsam mit den Bedingungen der Korrektur des unmittelbar vorhergehenden Trägers verwendet werden.

Die Erfindung betrifft auch ein Beschichtunganlage für Träger von Autoabgaskatalysatoren, welche mindestens eine erste Wägevorrichtung nach der vorliegenden Patentanmeldung aufweist, die vor der Beschichtungsstation angeordnet ist, eine Beschichtungsstation zur Beschichtung von Trägern für Autoabgaskatalysatoren, sowie eine zweite Wägevorrichtung, die nach der vorliegenden Patentanmeldung. Optional kann nach der zweiten Wägevorrichtung eine Korrekturstation angeordnet sein, welche beispielsweise ein Nachabsaugen oder ein nachträgliches Aufbringen zusätzlicher Beschichtung vornehmen kann. Diese Schritte können aber im Prinzip auch auf der Beschichtungsstation durchgeführt werden, wobei sich die Zykluszeit erhöht. Optional kann weiter eine dritte Wägevorrichtung gemäß der vorliegenden Patentanmeldung nach der Korrekturstation angeordnet sein. Optional können zwischen den Wägevorrichtungen, Beschichtungsstation und Korrekturstation Bandförderer angeordnet sein. Die Wägevorrichtungen sind mit einer Prozeßsteuerung bzw. einem Computer verbunden, welcher die erforderlichen Berechnungen zur Durchführung des Verfahrens durchführt und die verschiedenen Bestandteile der Beschichtungsanlage steuert.

### Beschreibung der Zeichnungen

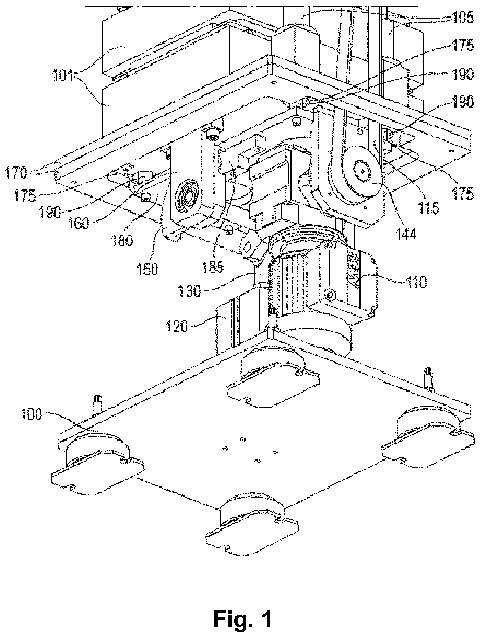

Figur 1 zeigt einen Teil der Wägevorrichtung mit einer Bodenplatte 100, auf welcher der Aktuator 120 befestigt ist. Der Aktuator 120 bewegt über ein Hebelsystem 130 die Exzenterscheibe 150, welche im Lager 160 drehbar gelagert ist. Das Lager 160 wird im Betrieb selbst nicht auf- oder abwärts bewegt. In der Exzenterscheibe 150 wird die Führung 185 der Trageplatte 180 bewegt. Wird also die Exzenterscheibe 150 gedreht, so bewegt sich die Trageplatte 180 auf oder ab. An der Trageplatte 180 ist außerdem der Antriebsmotor 110 befestigt, der über die Treibrolle 144 den Antriebsriemen 115 und die Transportbänder des Bandförderers antreibt. An der Trageplatte 180 sind außerdem die Verbindungselemente 190 befestigt, welche die Trageplatte 180 mit dem nicht abgebildeten Bandförderer verbinden. Die Verbindungselemente sind durch Öffnungen 175 in der Halteplatte 170 hindurchgeführt. Die Halteplatte 170 ist relativ zur Bodenplatte unbeweglich montiert, an ihrer Unterseite sind die Lager 160 befestigt, auf ihrer Oberseite sind die Waagen 101 angeordnet. In der Abbildung sind auf der Halteplatte 170 auch die Führungen 105 für die Verbindungselemente 190 montiert, in welchen die Verbindungselemente gelagert sind. Die Halteplatte 170 bewegt sich während des Betriebs nicht und kann beispielsweise durch Streben, Stützen oder ein Gehäuse starr mit der Bodenplatte 100 verbunden sein.

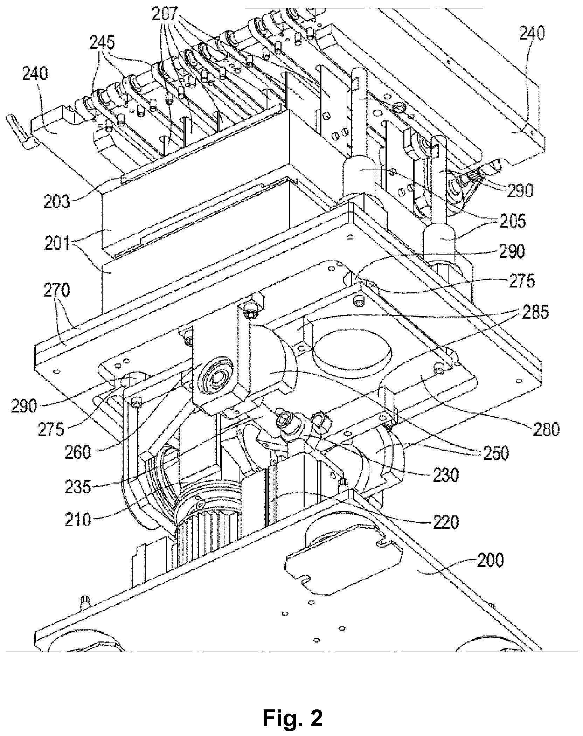

Figur 2 zeigt die Wägevorrichtung aus einer anderen Perspektive. Wie in Figur 1 sind die Bodenplatte 200 abgebildet, an welcher der Aktuator 220 befestigt ist. Das dargestellte Hebelsystem 230 dreht die an der Achse 235 montierten Exzenterscheiben 250, die im Lager 260 gehalten werden. Die Führungen 285 werden von den Exzenterscheiben 250 bewegt und sind mit der Trageplatte 280 verbunden, an welcher der Antriebsmotor 210 für die Transportbänder 245 des Bandförderers befestigt ist. An der Trageplatte sind außerdem die Verbindungselemente 290 mit ihrer Unterseite befestigt, welche durch die Öffnungen 275 in der Halteplatte 270 hindurchragen und von den auf der Halteplatte 270 montierten Führungen 205 geführt werden. Die Verbindungselemente 290 sind mit ihrem oberen Ende mit dem Körper des Bandförderers 240 verbunden. Auf der Halteplatte 270 sind die Waagen 201 übereinander angeordnet. Auf der Auflagefläche 203 der oberen Waage sind Auflageverlängerungen 207 montiert, die durch Öffnungen im Körper des Bandförderers 240 hindurchgeführt sind.

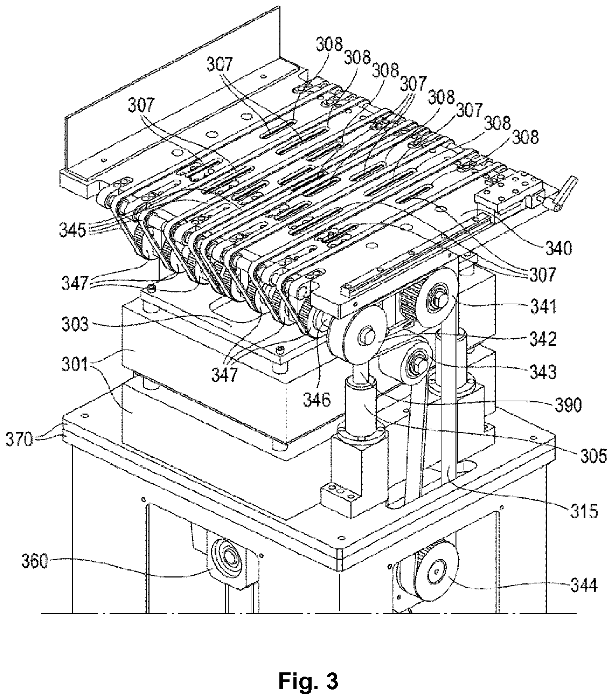

Figur 3 zeigt die Wägevorrichtung aus einer anderen Perspektive. Zwei Waagen 301 sind auf der Halteplatte 370 angeordnet, an welcher das Lager 360 der Exzenterscheibe befestigt ist. Der Motor treibt über die Treibrolle den Antriebsriemen 315 an, der über eine Führungsrolle 341 und eine Spannrolle 343 geführt ist und über eine Antriebsrolle 342 die Transmissionsachse 346 antreibt, die mehrere Transmissionsrollen 347 aufweist, welche jeweils eines der Transportbänder 345 des Bandförderers antreiben. Der Körper des Bandförderers 340 weist Öffnungen 308 auf, in welchen sich die Auflageverlängerungen 307 befinden, die auf der Auflagefläche 303 der Waagen 301 aufliegen. Entlang dieser Auflageverlängerungen 307 wird beim Wägevorgang der Körper des Bandförderers 340 abgesenkt. Hierbei bewegen sich die mit dem Körper des Bandförderers 340 verbundenen Verbindungselemente 390, geführt durch die Führungen 305, nach unten.

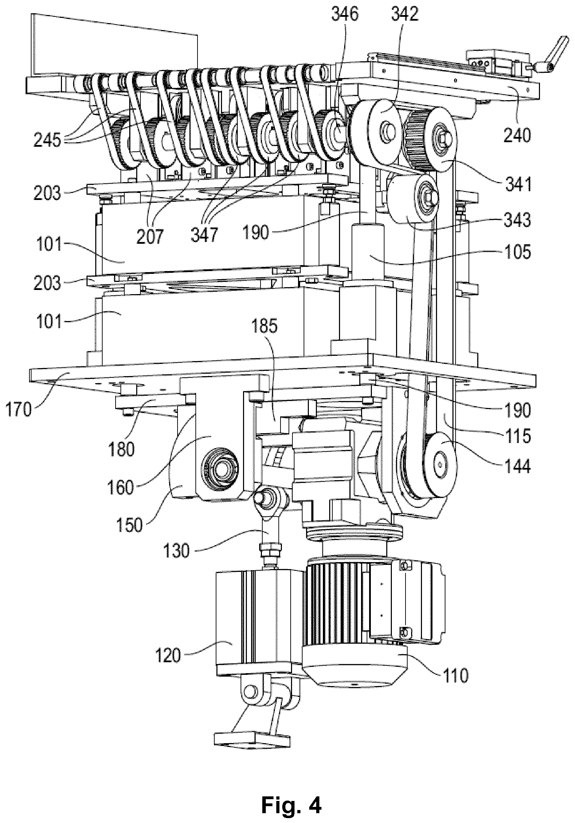

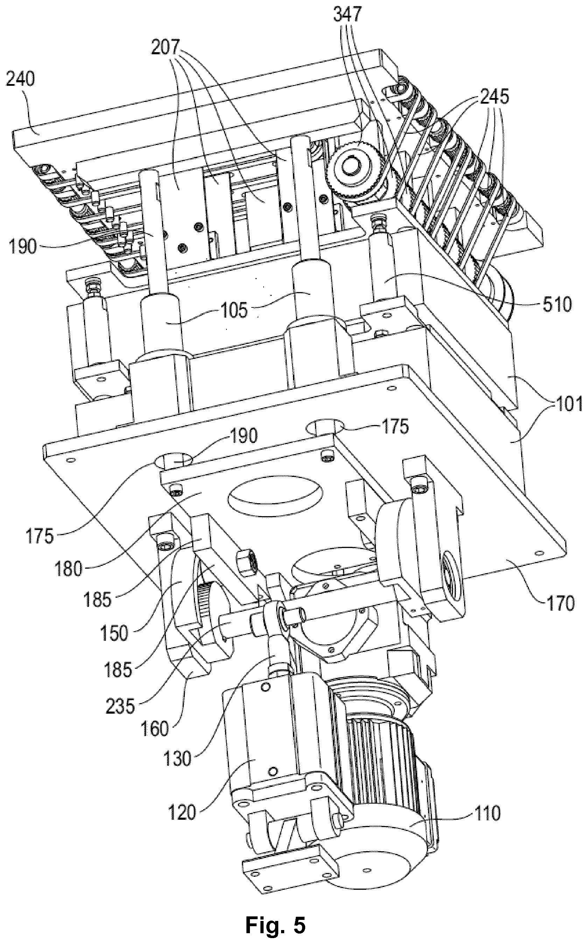

Figuren 4 und 5 zeigen die Wägevorrichtung in einer ähnlichen Perspektive wie die Figuren 1 und 2, jedoch ohne Gehäuseteile und aus einem anderen Blickwinkel.

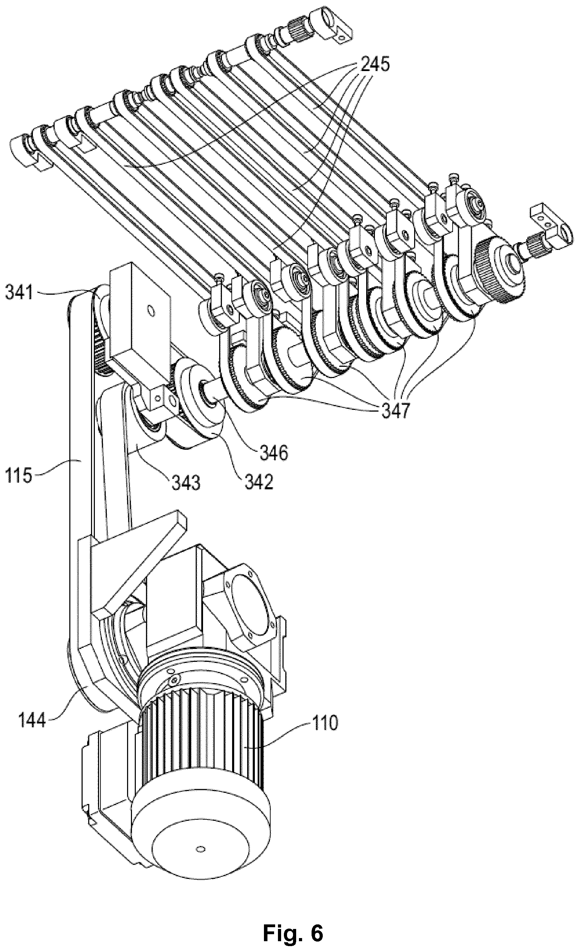

Figur 6 zeigt den beweglichen Bandförderer ohne die anderen Teile der Wägevorrichtung und ohne den Körper des Bandförderers 240.

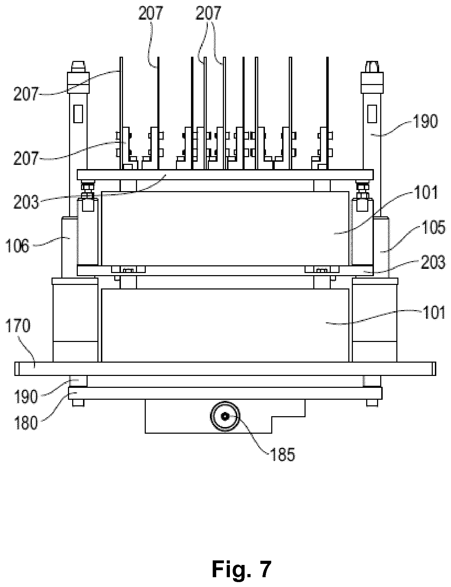

Figur 7 zeigt die Wägevorrichtung ohne den Bandförderer und ohne den Körper des Bandförderers 240, aber mit Teilen der Mechanik zum Heben und Senken des Bandförderers.

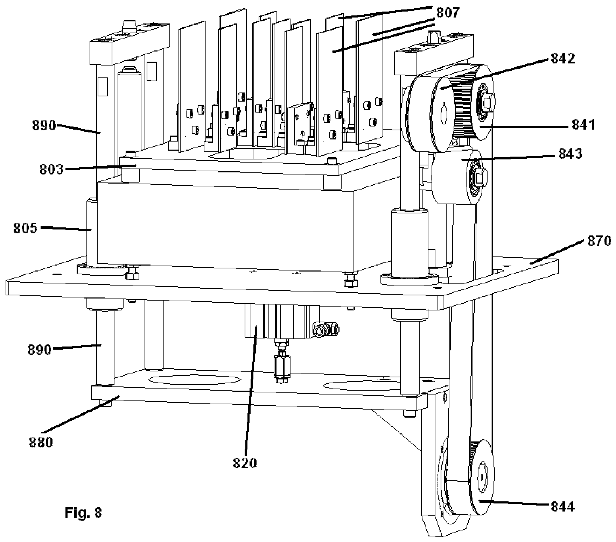

Figur 8 zeigt eine Konstruktion ohne vollständige Abbildung des Bandförderers, welcher auf den Verbindungselementen 890 angebracht wird. Hier ist kein Hebelsystem und keine Dämpfung (Endlagendämpfung) wie beispielsweise durch eine Exzenterscheibe vorgesehen.

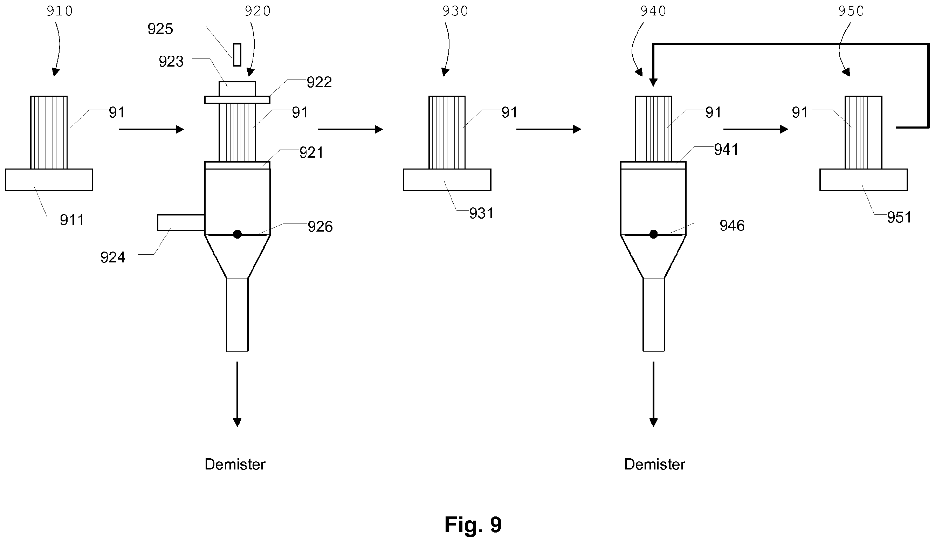

Figur 9 zeigt den möglichen Aufbau einer für das Verfahren geeigneten Beschichtungsanlage. Die Beschichtungsanlage weist eine Beschichtungsstation 920 zur Herstellung einer Rohbeschichtung auf. Zu diesem Zweck wird der zu beschichtende Träger 91 auf den dafür vorgesehenen Halteelementen abgesetzt. Durch Aufblasen einer aufblasbaren Gummimanschette 921 wird der Träger 91 auf der Station fixiert und abgedichtet. Weiterhin kann eine zweite Dichtungsmanschette 922 vorgesehen sein, die auf das obere Ende des Trägers 91 aufgebracht wird, um einen Überlauf 923 dicht zu fixieren. Oberhalb des Überlaufs 923 ist ein Füllsensor und/oder eine Dosierdüse für Beschichtungssuspension 925 angeordnet, über den die ausreichende Befüllung des Trägers 91 detektiert wird bzw. Beschichtungssuspension auf die obere Stirnfläche des Trägers dosiert werden kann. Ein Füllsensor kann ein Signal an die Vorrichtungssteuerung bzw. Regelung der Beschichtungsanlage geben.

Zur Anfertigung der Rohbeschichtung kann die Beschichtungssuspension über die Zuleitung 924 von unten in den Träger eingepumpt werden, bis der Füllsensor das Erreichen einer festgelegten Füllhöhe meldet.

Alternativ dazu kann aber auch über eine Dosierdüse für Beschichtungssuspension 925 Beschichtungssuspension auf die obere Stirnfläche des Trägers in den Überlauf zu dosieren, um ein unkontrolliertes Herabfließen zu vermeiden.

Danach wird überschüssige Beschichtungssuspension durch Öffnen einer Absaug- bzw. Drosselklappe 926 aus den Kanälen des Trägers 91 durch Absaugen (Vorabsaugung) entfernt, bzw auf die obere Stirnfläche des Trägers dosierte Beschichtungssuspension eingesaugt und dabei ein möglicher Überschuß herausgesaugt.

Hierzu ist eine Rohrleitung mit einem (hier nicht gezeigten) Unterdruckgefäß und einem Demister verbunden. Das Unterdruckgefäß ist mit einem Gebläse verbunden, welches einen Unterdruck zwischen beispielsweise 50 und 500 und oder 300 mbar aufrecht erhält. Intensität und Dauer der Vorabsaugung können mit Hilfe der Drosselklappe 926 eingestellt werden. Sie bestimmen die auf dem Träger verbleibende Roh-Beschichtungsmenge. Außerdem dient dieser Vorgang dazu, eventuell durch Beschichtungssuspension verstopfte Kanäle zu öffnen.

Fig. 9 zeigt weiter eine Wiegestation 930, in der der beschichtete Träger 91 auf einer Wägevorrichtung nach der vorliegenden Patentanmeldung 931 gewogen wird. Auf diese Weise kann die Menge der Beschichtungssuspension im Träger 91 ermittelt werden. Zusätzlich kann eine der Beschichtungsstation 920 vorgeschaltete Wiegestation 910 mit Wägevorrichtung nach der vorliegenden Patentanmeldung 911 vorgesehen sein, die das Gewicht des Trägers 91 vor der Beschichtung bestimmt.

Sollte sich nun in der Wiegestation 930 herausstellen, dass die Beladung des Trägers 91 mit Beschichtungssuspension zu hoch ist, wird der Träger auf eine Korrekturstation 940 befördert, über die die zuviel aufgebrachte Beschichtungssuspension entfernt wird. In der Korrekturstation 940 befindet sich, ähnlich der Beschichtungsstation 920, eine Dichtungsmanschette 941, die den Träger 91 dicht auf der Nachsaugstation 940 fixiert. Über eine Absaugklappe 946 wird dabei die Menge der abgesaugten Beschichtungssuspension gesteuert bzw. geregelt. Sollte dagegen in der Wiegestation festgestellt werden, daß die aufgebrachte Beschichtungsmenge schon unterhalb des Schwellwertes liegt, so kann der Träger ohne Nachsaugung aus der Beschichtungsanlage ausgeschleust und einer hier nicht dargestellten Trocknungs- und Kalzinierstation zugeführt werden.

Die Korrekturstation 940 ist in Fig. 9 ausgestattet, um einen Überschuß an aufgebrachte Beschichtung durch Nachsaugen zu entfernen. Alternativ dazu kann die Korrekturstation 940 auch identisch zur Beschichtungsstation 920 aufgebaut sein und ebenfalls eine Zuleitung für die Beschichtungssuspension 924 aufweisen, und/oder mit einer zweiten Dichtungsmanschette 922 für das obere Ende des Trägers 91, einem Überlauf 923 und/oder einem Füllsensor und/oder eine Dosierdüse für Beschichtungssuspension 925 ausgestattet sein. Wird beispielsweise eine Dosierdüse für Beschichtungssuspension 925 oder eine andere Möglichkeit zum Einbringen von Beschichtungssuspension eingesetzt, so kann an der Korrekturstation 940 natürlich auch eine Korrektur bei einem Mangel an aufgebrachter Beschichtung behoben werden.

Nach der Korrektur der Beschichtungsmenge durch Nachabsaugung oder Zuführen von weiterer Beschichtungssuspension erfolgt besonders bevorzugt ein weiteres Wiegen des Trägers 91 in der Wiegestation 930 oder in einer weiteren Wiegestation 950 mit einer Wägevorrichtung nach der vorliegenden Patentanmeldung 951, wie in Fig. 9 dargestellt. Sollte bei der weiteren Kontrolle der Menge der Beschichtungssuspension im Träger 91 festgestellt werden, dass sich noch immer zuviel Beschichtungssuspension im Träger 91 befindet, kann dieser nochmals in die Korrekturstation 940 befördert werden. Andernfalls wird der Träger aus der Beschichtungsstation ausgeschleust und der Trocknungs- und Calcinierstation zugeführt.

Die Wiegestationen 930 und 950 können, wie bereits angedeutet, zusammengelegt werden, abhängig von der gewünschten Flexibilität bzw. Geschwindigkeit der gesamten Anlage. Weiterhin können die Wiegestation 930 bzw. 950 mit der Nachsaugstation 940 oder der Beschichtungsstation 920 kombiniert werden.

Die Bezugszeichen der Figuren 4 bis 7 sind mit den Bezugszeichen der Figuren 1 bis 3 identisch.

**Liste der Bezugszeichen:**

| Bodenplatte 100, 200 | Transmissionsrollen 347 |
|---|---|
| Waagen 101, 201, 301, 801 | Exzenterscheibe 150, 250 |
| Auflagefläche der Waagen 203, 303, 803 | Lager 160, 260, 360 |
| Führungen für Verbindungselemente 105, 205, 305, 805 | Halteplatte 170, 270, 370, 870 |
| Auflageverlängerung 207, 307, 807 | Öffnungen für Verbindungselemente 175, 275 |
| Öffnungen im Körper des Bandförderers 308 | Trageplatte 180, 280, 880 |
| Antriebsmotor 110 | Führung der Trageplatte 185, 285 |
| Waagen 101, 201, 301, 801 | Verbindungselemente 190, 290, 390, 890 |
| Auflagefläche der Waagen 203, 303, 803 | Träger 91 |

| Führungen für Verbindungselemente 105, 205, 305, 805 | Erste Wiegestation 910 |
|---|---|
| Auflageverlängerung 207, 307, 807 | Beschichtungsstation 920 |
| Öffnungen im Körper des Bandförderers 308 | Erste aufblasbare Gummimanschette 921 |
| Antriebsmotor 110 | Zweite aufblasbare Gummimanschette 922 |
| Antriebsriemen 115, 315, 815 | Überlauf 923 |
| Aktuator 120, 220, 820 | Zuleitung für Beschichtungssuspension 924 |
| Hebelsystem 130, 230 | Füllsensor / Dosierdüse für Beschichtungssuspension 925 |
| Achse 235 | Drosselklappe 926 |
| Körper des Bandförderers 240, 340 | Zweite Wiegestation 930 |
| Führungsrolle 341, 841 | Wägevorrichtung nach vorliegender Patentanmeldung 911, 931, 951 |
| Antriebsrolle 342, 842 | Korrekturstation 940 |
| Spannrolle 343, 843 | aufblasbare Gummimanschette 941 |
| Treibrolle 144, 844 | Absaugklappe 946 |
| Transportbänder des Bandförderers 245, 345 | Wiegestation 950 |
| Transmissionsachse 346 | |

### Beispiele

Es wurden zehn Träger für Autoabgaskatalysatoren gewogen und die Zeitdauer der Wägung bestimmt. Hierzu wurde eine Wägevorrichtung mit Endlagendämpfung durch eine Exzenterscheibe verwendet, wie in Figuren 1 bis 7 abgebildet, für die Vergleichsversuche wurde eine Wägevorrichtung ohne Endlagendämpfung eingesetzt. Als Aktuator wurde jeweils ein Pneumatikzylinder verwendet. Es wurde die Zeit für den Wägezyklus jedes Trägers in Sekunden bestimmt.

**Bestimmung der Zykluszeit für einen vollständigen Wägezyklus**

| Schritte | Wägezyklus: |
|---|---|
| 1 | Transport des Teils in Position |
| 2 | Tarieren der Waagen |
| 3 | Absenken des Bandförderers |
| 4 | Wiegen des Teils |
| 5 | Anheben des Bandförderers |
| 6 | Abtransport des Teils aus der Wägestation |

| | **Beispiele** | **Vergleichsbeispiele** |
|---|---|---|
| Aktuator Endlagendämpfung | Ein Pneumatikzylinder Exzenterscheibe, s. Fig1-7 | Ein Pneumatikzylinder Keine |
| 1 | **4.6** | **5.9** |
| 2 | **4.4** | **6.2** |
| 3 | **4.5** | **6.0** |
| 4 | **4.5** | **6.1** |
| 5 | **4.4** | **5.8** |
| 6 | **4.3** | **6.0** |
| 7 | **4.5** | **6.1** |
| 8 | **4.4** | **5.9** |
| 9 | **4.6** | **6.1** |
| 10 | **4.5** | **6.2** |
| Mittelwert | **4,47** | **6,03** |
| Medianwert | **4,5** | **6,05** |
| Standardabweichung | **0,095** | **0,134** |

## Patentansprüche

1. Wägevorrichtung für Stückgut, welches einen Bandförderer (240, 340) und mindestens eine unterhalb des Bandförderers (240, 340) angeordnete Waage (101, 201, 301, 801) mit einer Auflage für das Wägegut (203, 303, 803) aufweist, wobei die Waage (101, 201, 301, 801) starr angeordnet ist, der Bandförderer (240, 340) mindestens zwei Transportbänder (245, 345) aufweist, die Auflage für das Wägegut (203, 303, 803) mit mindestens einer Auflageverlängerung (207, 307, 807) versehen ist, die zwischen den Transportbändern (245, 345) des Bandförderers (240, 340) hindurchgeführt werden können und die Transportbänder (245, 345) des Bandförderers (240, 340) derart zur Waage (101, 201, 301, 801) hin bewegt werden können, so dass die Auflageverlängerungen (207, 307, 807) ohne eigene Bewegung zwischen den Transportbändern (245, 345) hindurchgeführt werden und auf den Transportbändern (245, 345) bewegtes Stückgut auf den Auflageverlängerungen (207, 307, 807) aufgelegt und durch die Waage (101, 201, 301, 801) gewogen werden kann, wobei die oberhalb der Waage angeordnete Bandfördereinheit in ihrer Gesamtheit zur Waage (101, 201, 301, 801) hin bewegt werden kann, die Endlagen der Bewegung des Bandförderers (240, 340) gedämpft werden, die Bewegung des Bandförderers (240, 340) durch einen einzigen Aktuator (120, 220, 820) erfolgt,
**dadurch gekennzeichnet, dass**
die Waage (101, 201, 301, 801) im Förderbetrieb komplett unterhalb des Bandförderers (240, 340) angeordnete ist und mindestens zwei Waagen (101, 201, 301, 801) mit unterschiedlichen Wägebereichen eingesetzt werden.

2. Wägevorrichtung nach Anspruch 1, wobei die Transportbänder (245, 345) des Bandförderers (240, 340) vollständig oberhalb des Aktuators (120, 220, 820) und der Waagen (101, 201, 301, 801) geführt sind.

3. Wägevorrichtung nach Anspruch 1 oder 2, welche eine Mehrzahl an Auflageverlängerungen (207, 307, 807) aufweist.

4. Wägevorrichtung nach nach einem oder mehreren der Ansprüche 1 bis 3, welche eine Mehrzahl an Transportbändern (245, 345) aufweist.

5. Wägevorrichtung nach einem oder mehreren der Ansprüche 1 bis 4, wobei die Auflageverlängerungen (207, 307, 807) in zwei oder drei quer zur Förderrichtung des Bandförderers (240, 340) verlaufenden Reihen angeordnet sind.

6. Wägevorrichtung nach einem oder mehreren der Ansprüche 1 bis 5, wobei der Bandförderer (240, 340) zwei bis zwanzig Förderbänder (245, 345) aufweist.

7. Wägevorrichtung nach einem oder mehreren der Ansprüche 1 bis 6, wobei die Dämpfung mechanisch oder elektronisch erfolgt.

8. Wägevorrichtung nach einem oder mehreren der Ansprüche 1 bis 7, wobei die Dämpfung mechanisch über eine Exzenterscheibe erfolgt.

9. Wägevorrichtung nach einem oder mehreren der Ansprüche 1 bis 8, wobei die Bewegung des Bandförderers (240, 340) durch einen hydraulischen, pneumatischen oder elektrischen Aktuator (120, 220, 820) erfolgt.

10. Wägevorrichtung nach einem oder mehreren der Ansprüche 1 bis 9, wobei die Wägevorrichtung einen Sensor zur Detektion des transportierten Stückguts auf dem Bandförderer (240, 340) und der Anordnung über den Auflageverlängerungen (207, 307, 807) aufweist.

11. Wägevorrichtung nach einem oder mehreren der Ansprüche 1 bis 10, wobei die Hubbewegung geführt wird, insbesondere durch eine Führung ausgewählt aus der Gruppe bestehend aus Kugelführung, Reibführung, Säulenkugelführung und deren Kombinationen.

12. Wägevorrichtung nach einem oder mehreren der Ansprüche 1 bis 11, wobei die Wägevorrichtung drei oder vier Waagen (101, 201, 301, 801) aufweist.

13. Wägevorrichtung nach einem oder mehreren der Ansprüche 1 bis 12, wobei die Waagen (101, 201, 301, 801) eingehaust und gegen Störeinflüsse geschützt ist.

14. Verfahren zur Wägung von Stückgut mit einer Vorrichtung nach einem der vorstehenden Patentansprüche mit den Schritten
- Transportieren des zu wägenden Stückguts bis zu einer geeigneten Position über den Auflageverlängerungen (207, 307, 807);
- Stoppen des Bandförderers (240, 340);
- Gegebenenfalls Tarieren der Waagen (101, 201, 301, 801);
- Absenken des Stückguts auf die Auflageverlängerungen (207, 307, 807) durch Absenken des Bandförderers (240, 340) in seiner Gesamtheit;
- Feststellen des Gewichts des Stückguts durch dessen Krafteinwirkung auf die Waagen (101, 201, 301, 801);
- Anheben des Stückguts von den Auflageverlängerungen (207, 307, 807) durch Anheben des Bandförderers (240, 340) in seiner Gesamtheit;
- Abtransportieren des Stückguts.

15. Verwendung der Wägevorrichtung nach einem oder mehreren der Ansprüche 1 bis 14 in einem Verfahren zur Herstellung von Autoabgaskatalysatoren.

16. Beschichtunganlage für Träger von Autoabgaskatalysatoren, welches mindestens eine erste Wägevorrichtung aufweist, die vor der Beschichtungsstation angeordnet ist, eine Beschichtungsstation zur Beschichtung von Trägern für Autoabgaskatalysatoren, sowie eine zweite Wägevorrichtung, welche nach der Beschichtungsstation angeordnet ist, .wobei mindestens eine der Wägevorrichtung eine Wägevorrichtung nach einem der Ansprüche 1 bis 13 ist.

## Claims

1. Weighing device for piece goods, which has a belt conveyor (240, 340) and at least one weighing scale (101, 201, 301, 801) arranged below the belt conveyor (240, 340), said weighing scale comprising a support for the goods to be weighed (203, 303, 803), wherein the weighing scale (101, 201, 301, 801) is arranged rigidly, the belt conveyor (240, 340) comprises at least two conveyor belts (245, 345), the support for the goods to be weighed (203, 303, 803) is provided with at least one support extension (207, 307, 807) that can be guided between the conveyor belts (245, 345) of the belt conveyor (240, 340) and the conveyor belts (245, 345) of the belt conveyor (240, 340) can be moved toward the scale (101, 201, 301, 801) such that the support extensions (207, 307, 807) are guided between the conveyor belts (245, 345), without moving themselves, and piece goods moved on the conveyor belts (245, 345) are placed on the support extensions (207, 307, 807) and can be weighed by the weighing scale (101, 201, 301, 801), wherein the belt conveyor unit arranged above the weighing scale can be moved in its entirety toward the weighing scale (101, 201, 301, 801), the end positions of the movement of the belt conveyor (240, 340) are damped, the belt conveyor (240, 340) is moved by a single actuator (120, 220, 820),
**characterized in that**
the weighing scale (101, 201, 301, 801) is arranged completely below the belt conveyor (240, 340) in conveying mode and at least two weighing scales (101, 201, 301, 801) having different weighing ranges are used.

2. Weighing device according to claim 1, wherein the conveyor belts (245, 345) of the belt conveyor (240, 340) are guided completely above the actuator (120, 220, 820) and the weighing scales (101, 201, 301, 801).

3. Weighing device according to claim 1 or 2, which has a plurality of support extensions (207, 307, 807).

4. Weighing device according to one or more of claims 1 to 3, which has a plurality of conveyor belts (245, 345).

5. Weighing device according to one or more of claims 1 to 4, wherein the support extensions (207, 307, 807) are arranged in two or three rows running transversely to the conveying direction of the belt conveyor (240, 340).

6. Weighing device according to one or more of claims 1 to 5, wherein the belt conveyor (240, 340) comprises two to twenty conveyor belts (245, 345).

7. Weighing device according to one or more of claims 1 through 6, wherein damping takes place mechanically or electronically.

8. Weighing device according to one or more of claims 1 to 7, wherein damping takes place mechanically via an eccentric disc.

9. Weighing device according to one or more of claims 1 to 8, wherein the belt conveyor (240, 340) is moved by means of an hydraulic, pneumatic or electric actuator (120, 220, 820).

10. Weighing device according to one or more of claims 1 to 9, wherein the weighing device has a sensor for detecting the transported piece goods on the belt conveyor (240, 340) and the arrangement via the support extensions (207, 307, 807).

11. Weighing device according to one or more of claims 1 to 10, wherein the stroke movement is guided, in particular by a guide selected from the group consisting of ball guide, friction guide, column ball guide and combinations thereof.

12. Weighing device according to one or more of claims 1 through 11, wherein the weighing device comprises three or four weighing scales (101, 201, 301, 801).

13. Weighing device according to one or more of claims 1 through 12, wherein the weighing scales (101, 201, 301, 801) are housed and protected against interference.

14. Method for weighing piece goods with a device according to any one of the preceding claims, comprising the steps of
- transporting the piece goods to be weighed to a suitable position over the support extensions (207, 307, 807);
- stopping the belt conveyor (240, 340);
- optionally taring the weighing scales (101, 201, 301, 801);
- lowering the piece goods onto the support extensions (207, 307, 807) by lowering the belt conveyor (240, 340) in its entirety;
- determining the weight of the piece goods as a result of their force acting on the scales (101, 201, 301, 801);
- lifting the piece goods from the support extensions (207, 307, 807) by lifting the belt conveyor (240, 340) in its entirety;
- transporting away the piece goods.

15. Use of the weighing device according to one or more of claims 1 through 14 in a method for the production of automotive catalysts.

16. Coating system for supports of automotive catalysts, which comprises at least a first weighing device arranged upstream of the coating station, a coating station for coating supports for automotive catalysts, and a second weighing device arranged downstream of the coating station, wherein at least one of the weighing devices is a weighing device according to any one of claims 1 to 13.

## Revendications

1. Dispositif de pesage pour marchandises de détail, lequel présente un convoyeur à bande (240, 340) et au moins une balance (101, 201, 301, 801) comprenant un support pour les marchandises à peser (203, 303, 803) disposée en dessous du convoyeur à bande (240, 340), la balance (101, 201, 301, 801) étant disposée de façon rigide, le convoyeur à bande (240, 340) présentant au moins deux bandes de transport (245, 345), le support pour les marchandises à peser (203, 303, 803) étant muni d'au moins une prolongation de support (207, 307, 807) qui peuvent être guidées entre les bandes de transport (245, 345) du convoyeur à bande (240, 340) et les bandes de transport (245, 345) du convoyeur à bande (240, 340) pouvant être déplacées vers la balance (101, 201, 301, 801) de telle façon que les prolongations de support (207, 307, 807) soient guidées sans mouvement propre entre les bandes de transport (245, 345) et que des marchandises de détail déplacées sur les bandes de transport (245, 345) puissent être posées sur les prolongations de support (207, 307, 807) et pesées par la balance (101, 201, 301, 801), l'unité de convoyeur à bande disposée au-dessus de la balance pouvant être déplacée dans sa totalité vers la balance (101, 201, 301, 801), les positions finales du mouvement du convoyeur à bande (240, 340) étant amorties, le mouvement du convoyeur à bande (240, 340) étant effectué par un seul actionneur (120, 220, 820),
**caractérisé en ce que**
la balance (101, 201, 301, 801) est disposée, dans le mode de transport, entièrement en dessous du convoyeur à bande (240, 340) et au moins deux balances (101, 201, 301, 801) avec des plages de pesée différentes sont utilisées.

2. Dispositif de pesage selon la revendication 1, dans lequel les bandes de transport (245, 345) du convoyeur à bande (240, 340) sont guidées entièrement au-dessus de l'actionneur (120, 220, 820) et des balances (101, 201, 301, 801).

3. Dispositif de pesage selon la revendication 1 ou 2, lequel présente une pluralité de prolongations de support (207, 307, 807).

4. Dispositif de pesage selon une ou plusieurs des revendications 1 à 3, lequel présente une pluralité de bandes de transport (245, 345).

5. Dispositif de pesage selon une ou plusieurs des revendications 1 à 4, dans lequel les prolongations de support (207, 307, 807) sont disposées dans deux ou trois rangées s'étendant perpendiculairement à la direction de transport du convoyeur à bande (240, 340).

6. Dispositif de pesage selon une ou plusieurs des revendications 1 à 5, dans lequel le convoyeur à bande (240, 340) présente de deux à vingt bandes de transport (245, 345).

7. Procédé selon une ou plusieurs des revendications 1 à 6, dans lequel l'amortissement s'effectue mécaniquement ou électroniquement.

8. Procédé selon une ou plusieurs des revendications 1 à 7, dans lequel l'amortissement s'effectue mécaniquement par le biais d'un disque excentrique.

9. Dispositif de pesage selon une ou plusieurs des revendications 1 à 8, dans lequel le mouvement du convoyeur à bande (240, 340) s'effectue par le biais d'un actionneur (120, 220, 820) hydraulique, pneumatique ou électrique.

10. Dispositif de pesage selon une ou plusieurs des revendications 1 à 9, dans lequel le dispositif de pesage présente un capteur pour la détection des marchandises de détail transportées sur le convoyeur à bande (240, 340) et de la disposition au-dessus des prolongations de support (207, 307, 807).

11. Dispositif de pesage selon une ou plusieurs des revendications 1 à 10, dans lequel le mouvement de levage est effectué, en particulier par un guidage choisi dans le groupe constitué de guidage à bille, de guidage à friction, de guidage bille à colonne et de leurs combinaisons.

12. Dispositif de pesage selon une ou plusieurs des revendications 1 à 11, dans lequel le dispositif de pesage présente trois ou quatre balances (101, 201, 301, 801).

13. Dispositif de pesage selon une ou plusieurs des revendications 1 à 12, dans lequel les balances (101, 201, 301, 801) sont cartérisées ou protégées contre les perturbations.

14. Procédé de pesage de marchandises de détail au moyen d'un dispositif selon l'une quelconque des revendications précédentes, comprenant les étapes de :
- transport des marchandises de détail à peser jusqu'à une position appropriée au-dessus des prolongations de support (207, 307, 807) ;
- arrêt du convoyeur à bande (240, 340) ;
- le cas échéant, tarage des balances (101, 201, 301, 801) ;
- abaissement des marchandises de détail sur les prolongations de support (207, 307, 807) par l'abaissement du convoyeur à bande (240, 340) dans sa totalité ;
- détermination du poids des marchandises de détail par le biais de leur application de force sur les balances (101, 201, 301, 801) ;
- levage des marchandises de détail des prolongations de support (207, 307, 807) par le levage du convoyeur à bande (240, 340) dans sa totalité ;
- évacuation des marchandises de détail.

15. Utilisation du dispositif de pesage selon une ou plusieurs des revendications 1 à 14 dans un procédé pour la fabrication de catalyseurs automobiles.

16. Installation de revêtement pour supports de catalyseurs automobiles, laquelle présente au moins un premier dispositif de pesage, qui est disposé en amont de la station de revêtement, une station de revêtement pour le revêtement de supports pour catalyseurs automobiles, ainsi qu'un deuxième dispositif de pesage, lequel est disposé en aval de la station de revêtement, au moins un des dispositifs de pesage étant un dispositif de pesage selon l'une quelconque des revendications 1 à 13.
